# EUROPÄISCHE PATENTSCHRIFT

(11) **EP 1 039 152 B1**
(45) Veröffentlichungstag und Bekanntmachung des Hinweises auf die Patenterteilung: **26.04.2006**
(21) Anmeldenummer: 00104124.3
(22) Anmeldetag: 29.02.2000
(51) Int. Cl.: F16B 25/00, E06B 3/984, E06B 3/96, F16B 35/04

(54) **Schraube zur gegenseitigen Verbindung von stumpf oder in einem Gehrungsschnitt aneinander anliegenden oder aneinander anstossenden Holzprofilen**
Assembly screw for butt or mitre jointed wooden section members
Vis d'assemblage pour des profilés en bois avec des joints droits ou en onglet

(30) Priorität: 25.03.1999 DE 29905533 U
(43) Veröffentlichungstag der Anmeldung: 27.09.2000
(73) Patentinhaber: SFS intec Holding AG, 9435 Heerbrugg (CH)
(72) Erfinder: Steffen, Markus, 9472 Grabs (CH); Sieber, Alex, 9434 Au (CH)

(56) Entgegenhaltungen:
- EP-A- 0 267 153
- DE-B- 1 137 197
- DE-U- 7 911 217

## Beschreibung

Die Erfindung betrifft eine Schraube zur gegenseitigen Verbindung von stumpf oder in einem Gehrungsschnitt aneinander anliegenden oder aneinander anstoßenden Holzprofilen, wobei zwei mit einem Gewinde versehene Schaftabschnitte verschiedenen Durchmessers vorgesehen sind und der eine Schaftabschnitt mit dem größeren Durchmesser mit einem Werkzeugangriff ausgestaltet isL

In vielen Ausführungsvarianten wurde schon versucht, mechanisch wirkende Holzverbindungen herzustellen, welche insbesondere bei Fenster oder Fensterrahmen zu verschiedenen Lösungen führten. Bei der Verbindung von Holzprofilen ergeben sich vielfach Probleme, weil der natürliche Werkstoff Holz quer zur Faserrichtung relativ starken Dimensionsänderungen unterworfen ist. Zudem ist eine optimale Befestigung in Holz parallel zur Faserrichtung nach wie vor problematisch. Mit den bisherigen Methoden zur Verbindung von Holzprofilen ergeben sich fast immer schwundbedingte Spaltbildungen, was nicht nur zu ästhetischen Problemen, sondern auch zu Einbußen bei der Festigkeit einer solchen Verbindung führt. Eine Spaltwirkung führt insbesondere bei bewitterten Holzteilen zu einer Kapillarfuge, über die Wasser eindringen kann. Dadurch findet eine Anfeuchtung des Holzes statt. Selbst wenn eine Verschraubung unter Aufbringung eines großen Anzugsmomentes angewendet wird, kann eine schwundbedingte Spaltbildung nicht verhindert werden. Außerdem darf gerade bei Schrauben für den Holzbereich, insbesondere bei Einsatz parallel zur Faserrichtung, kein allzu großes Drehmoment aufgebracht werden, ansonsten die Schraube überdreht.

Gemäss der DE-B-1 137 197 wird eine Schraube mit zwei mit einem Gewinde versehenen Schaftabschnitten verschiedenen Durchmessers eingesetzt, wobei das eine Gewinde in einen Türstockrahmen eingreift und das Gewinde mit dem kleineren Durchmesser in das Mauerwerk eingreift und dort über einen Dübel verankert wird. Es ist dabei gleichgültig, ob der Türstockrahmen unmittelbar auf dem Mauerwerk anliegt oder ein entsprechender Abstand vom Mauerwerk aufweist. Es gilt hier ausschliesslich, den Rahmen mit dem Mauerwerk zu verbinden. Am Übergangsbereich zwischen dem Rahmen und dem Mauerwerk ist keine konstruktive Ausführungsvariante der Schraube vorhanden, die ein Abstützen am Bohrloch in diesem Bereich ermöglichen würde.

In der EP-A-0 267 153 geht es um eine Schraube zur Abstandsbefestigung von Bauteilen, welche einen ersten dünneren Gewindetell und einen zweiten dickeren Gewindeteil aufweist. Eine solche Schraube ist ausschllessllch zur Abstandsbefestigung von Bauteilen geeignet, nicht jedoch zur unmittelbar aneinander liegenden Befestigung von Bautellen, welche sich nicht quer zur Achse der Schraube bewegen dürfen.

In der EP-A-0307119 ist eine selbstbohrende Schraube gezeigt, weiche zwischen zwei Gewindeabschnitten einen gewindefreien Abschnitt aufweist. Der gewindefrele Abschnitt weist einen Durchmesser auf, der grösser ist als der Kemdurchmesser des Gewindeabschnittes unterhalb des Schraubenkopfes. Für einen Einsatz zur Verbindung von aneinander anstossenden Holzprofilen, wo der gewindefreie Abschnitt am Übergangsbereich zwischen den beiden Holzprofilen zu liegen kommen soll und wo der dann dem gewindefreien Abschnitt in Elndrehrichtung folgende Gewindeabschnitt in voller Gewindehöhe eingreifen soll, könnte diese Schraube nicht eingesetzt werden.

Die vorliegende Erfindung hat sich daher zur Aufgabe gestellt, eine Schraube der eingangs genannten Art zu Art zu schaffen, mit welcher sowohl Querkräfte als auch in Längsrichtung des Befestigungselementes wirkende Kräfte optimal übertragen werden können.

Erfindungegemäß gelingt dies dadurch, dass der Schaftabschnitt mit dem größeren Durchmesser nur über einen dem werkzeugangriffselügen Ende zugewandten Teilbereich seiner axialen Länge mit einem Gewindeabschnitt versehen und der an diesen Gewindeabschnitt anschließende Bereich des Schaftabschnittes bis an den Übergang zum Schaftabschnitt kleineren Durchmessers gewindefrei ausgebildet ist und einen dem Kemdurchmesser des vom Gewinde gebildeten Gewindeabschnittes entsprechenden Durchmesser aufweist.

Eine derartige Schraube kann bei allen möglichen Holzkonstruktionen wie Wänden oder Decken, Fenstern oder Türen, Fenster- oder Türrahmen, Möbeln, Regalen oder dergleichen eingesetzt werden. Selbst bei starken Belastungen auf die miteinander zu verbindenden Holzprofile, bei welchen es sich auch um Bretter handeln kann, können die erforderlichen Querkräfte problemlos aufgenommen werden. Außerdem ist eine gegenseitige feste und schwundausgleichende Verbindung der Holzprofile gewährleistet.

Eine erfindungsgemäße Schraube kann so eingesetzt werden, dass deren antriebsseitiges Ende in dem ersten Holzprofil quer zur Faserrichtung liegt und durch einen entsprechenden Gewindeabschnitt festgelegt ist und mit ihrem anderen Ende zumindest annähernd in Faserrichtung in das zweite Holzprofil eingreift. Damit ist eine optimale Befestigung möglich, ohne dass es zusätzlicher Gegenhalterungen wie Muttern oder dergleichen bedarf. Die erforderlichen Festigkeitswerte können allein durch den Einsatz einer Schraube, welche Gewindeabschnitte für beide Holzprofile vorsieht, erzielt werden.

Durch die Ausgestaltung mit den beiden Gewindeabschnitten und dem gewindefreien Bereich ist eine sichere Verankerung in beiden Holzprofilen möglich, wobei der dazwischen liegende gewindefreie Schaftabschnitt eine optimale Wirkung zur Aufnahme der Querkräfte entfalten kann.

Eine erfindungsgemässe ausgeführte Konstruktion ist schon aus Fertigungsgründen optimal, da lediglich zwei Schaftabschnitte mit wesentlicher Abweichung des Durchmessers vorhanden sind. Aber auch ein großer Querschnitt der Schraube, insbesondere des gewindefreien Bereiches, der im Übergangsbereich zwischen zwei zu verbindenden Holzprofilen zu liegen kommt, ist möglich.

Dabei ist es auch möglich, dass die Gewindeabschnitte der Schraube die gleiche Gewindesteigung aufweisen. Bei einer solchen Ausbildung einer Schraube bedarf es jedoch eines vorhergehenden exakten Zusammendrückens der Eck- oder Kämpferverbindung, da ein gegenseitiges Anziehen der beiden Holzprofile beim Eindrehen der Schraube nicht mehr möglich ist.

Eine solche Möglichkeit wird dann geschaffen, wenn die beiden Gewindeabschnitte der Schraube eine unterschiedliche Gewindesteigung aufweisen. Dabei ist es vorteilhaft, wann der dem antriebsseltigen Ende der Schraube zugewandte Gewindeabschnitt eine kleinere Gewindesteigung aufweist als der dem anderen, freien Ende zugewandte Gewindeabschnitt. Dadurch ist gewährleistet, dass die beiden miteinander zu verbindenden Holzprofile beim Eindrehen der Schraube aneinander angepresst werden, wobei die beiden Holzproflle insbesondere bei den letzten Umdrehungen der Schraube fest gegeneinander gepresst werden.

Eine andere vorteilhafte Ausgestaltung sieht vor, dass der Schaftabschnitt der Schraube mit dem größeren Durchmesser bei bestimmungsgemäßem Einsatz in einem ersten Holzprofil liegt und Ober zumindest einen kurzen Bereich in ein zweites Holzprofil hineinragt. Dadurch wird die Aufnahme von großen Querkräften in diesem sehr kritischen Bereich möglich. Einerseits wird dieser Bereich mit einem Abschnitt mit relativ großem Durchmesser überbrückt, andererseits können gerade durch diesen größeren Durchmesser größere Kräfte übertragen werden. Aber auch eine größere Anlagefläche zwischen der Schraube und den miteinander zu verbindenden Holzprofilen ist gegeben. Somit kann die Spaltgefahr auch bei großen Querbelastungen praktisch verhindert werden. Eine derartige Ausführung ist insbesondere deshalb vorteilhaft, weil in dem Profil in der Regel für den Eingriff parallel zur Faserrichtung ein längerer Abschnitt zur Verfügung steht als in dem quer zur Faserrichtung zu durchdringenden Holzprofil. Somit ist gerade auch in diesem Bereich die Übertragung von größeren Querkräften möglich.

Weiter wird vorgeschlagen, dass die Steigung des Gewindes des in das zweite Holzprofil eingreifenden Gewindeabschnittes der Schraube annähernd dem Kerndurchmesser des Schaftes in diesem Gewindeabschnitt entspricht. Bezogen auf den Durchmesser der Schraube ist demnach verhältnismäßig wenig Gewinde vorhanden. Da die zwischen jeweils einem Gewinde verbleibenden Holzabschnitte relativ groß sind, kann jedoch ein optimales Last-Form-Verhalten erzielt werden.

Weitere erfindungsgemäße Merkmale und besondere Vorteile werden in der nachstehenden Beschreibung anhand der Zeichnung noch näher erläutert. Es zeigen:
- Fig. 1: eine erfindungsgemäße Schraube;
- Fig. 2: einen Schnitt durch die Verbindung zwischen zwei Holzprofilen, wobei zwei erfindungsgemäße Schrauben eingesetzt sind;
- Fig. 3: eine Ansicht des Verbindungsbereiches zwischen zwei Holzprofilen in Pfellrichtung III in Fig. 2.

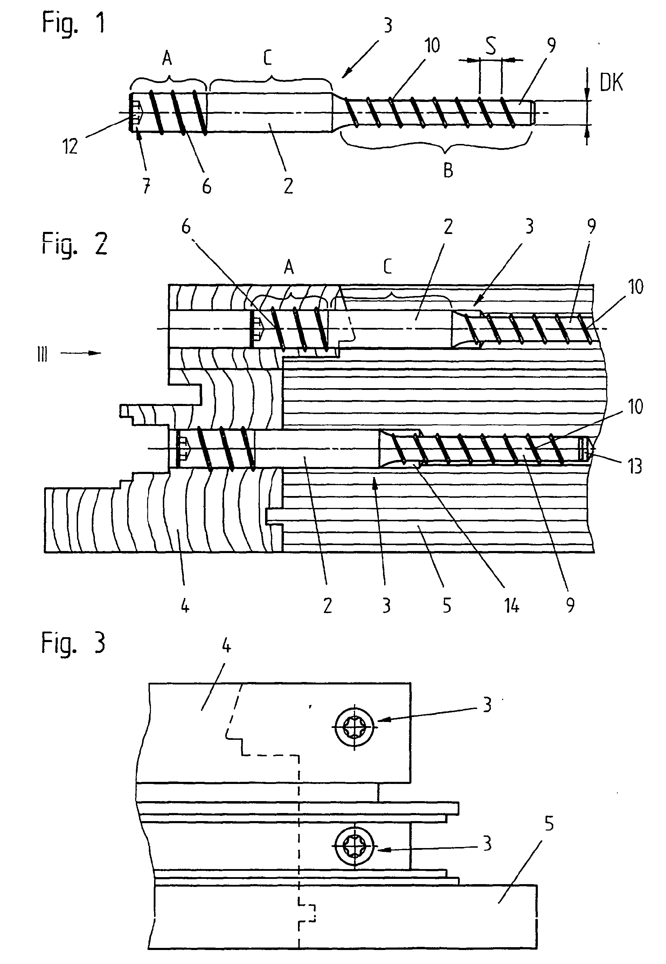

Die in Fig. 1 dargestellte Schraube 3 dient zur gegenseitigen Verbindung von stumpf oder in einem Gehrungsschnitt aneinander anliegenden oder aneinander anstoßenden Holzprofilen 4 und 5. In der Regel handelt es sich dabei um aus Holzprofilen gebildete Holzkonstruktionen wie Wände oder Decken, Fenster oder Türen, Fenster- oder Türrahmen, Möbel, Regale usw. Durch die beschriebene Eck- oder Kämpferverbindung wird mittels einer Schraube 3 eine Befestigungsmöglichkeit geschaffen, welche praktisch überall dort optimal eingesetzt werden kann, wo zumindest teilweise aus Holz bestehende Profile zusammengefügt werden sollen. Ob es sich dabei schlussendlich um Holzprofile, Holzplatten. Holzbalken oder Holzbretter handelt, ist nicht von Bedeutung. Natürlich wird eine solche Befestigungsmöglichkeit je nach Anwendungsbereich dimensionsmäßig angepasst. Die Schraube 3 greift in den gegenseitigen Verbindungsbereich der Holzprofile 4, 5 ein, wobei die Schraube 3 in beiden Holzprofilen 4, 5 durch Gewindeabschnitte A bzw. B gegen axiales Verschieben gesichert ist. Es Ist dadurch eine optimale gegenseitige Befestigung der beiden Holzprofile 4, 5 möglich.

Die Schraube 3 wird also im Übergangsbereich zwischen den zwei Holzprofilen 4, 5 eingesetzt und ist durch die beiden Gewindeabschnitte A und B an den beiden Holzprofilen 4 und 5 festlegbar. Zu diesem Zweck ist bei der gezeigten Ausführungsform auf einem Teilabschnitt A der Länge des Schaftabschnittes 2 ein Gewinde 6 aufgebracht. Dabei ist ein in Achsrichtung gesehen relativ kurzer Gewindeabschnitt A vorgesehen, wobei der daran anschließende Bereich C des Schaftabschnittes 2 eine glatte, zylindrische Oberfläche aufweist. Der Schaftabschnitt 2 und insbesondere der gewindefreie Bereich C desselben übergreift den Verbindungsbereich zwischen den beiden Holzprofilen 4 und 5, d.h. er ist in beiden Holzprofilen 4, 5 im Einsatz.

Die Schraube 3 weist einen Kopf 7 oder ein anderes angriffsseitiges Ende auf, wobei der Kopf 7 auch etwa den gleichen Durchmesser wie der Schaftabschnitt 2 aufweisen kann. Unmittelbar in Wirkverbindung mit dem zweiten Holzprofil 5 kommt die Schraube 3 lediglich mit dem auf dem Schaftabschnitt 9 der Schraube 3 vorgesehenen Gewindeabschnitt B und somit mit dem Gewinde 10.

Der Außendurchmesser des Schaftabschnittes 2 ist beim gezeigten Beispiel annähernd gleich groß wie der Durchmesser des Kopfes 7 oder eines entsprechenden Bundes der Schraube 3. Denkbar ist es auch, im Holzprofil 4 eine gegenüber der Bohrung 13 für den Schaftabschnitt 2 vergrößerte Bohrung zur versenkten Aufnahme des werkzeugangriffsseitigen Endes der Schraube 3, also z.B. eines größeren Kopfes 7, vorzusehen. In diesem Zusammenhang besteht dann die Möglichkeit, die vergrößerte Bohrung mittels eines Pfropfens zu verschließen. Bei einem Einsatz eines Pfropfens muss lediglich die Schraube 3 entsprechend tiefer in das Holzprofil 4 eingeführt werden, um den für den Pfropfen nötigen Platz zur Verfügung zu haben.

Das Gewinde 6 im Gewindeabschnitt A und das Gewinde 10 im Gewindeabschnitt B sind vorteilhaft schmal und schneidenartig ausgeführt. Die Steigung S des Gewindes 10 der Schraube entspricht annähernd dem Kerndurchmesser DK des Schaflabschnittes im Gewindebereich. Damit wird gerade im Stirnbereich des Holzprofiles 5, wo die Fasern parallel zur Achsrichtung des Befestigungselementes verlaufen, ein optimaler Gewindeeinsatz gewährleistet, so dass auch große Auszugskräfte zu erreichen sind.

Beim Einsatz der Schraube in einer Holzkonstruktion ist es notwendig, sowohl die Bohrung 13 zum Einsetzen des Schaftabschnittes 2 als auch die Bohrung 14 zum Einsatz des mit dem Gewindeabschnitt B versehenen Schaftabschnittes 9 vorab herzustellen. Damit ist ein optimaler Eingriff beider Gewindeabschnitte gewährleistet, und eine Spaltgefahr ist ausgeschlossen.

Der Einsatz der Schraube 3 erfolgt sinnvollerweise immer derart, dass der Gewindeabschnitt A stets relativ nahe dem Bereich der Fuge zwischen den Holzprofilen 4, 5 liegt, um dadurch die Lasteinleitung über das Gewinde möglichst nahe an der Fuge zu gewährleisten. Es ist also eine Lasteinleitung nahe der neutralen Fasern gegeben, weil sich dieser Bereich bei Quell- und Schwindvorgängen neutral verhält.

Durch die vorliegende Erfindung wird eine Befestigungsmöglichkeit geschaffen, mit welcher bei der Verbindung von Holzprofilen in optimaler Weise eine mechanische Befestigung in Form einer Schraube eingesetzt werden kann. Außerdem ist die Gewähr gegeben, dass die damit verbundenen Holzprofile später zu Recyclingzwecken problemlos wieder demontiert werden können. Zudem ist ein Nachziehen grundsätzlich möglich und insbesondere bei unterschiedlichen Gewindesteigungen der beiden Gewindeabschnitte A und B sinnvoll.

In der vorstehenden Beschreibung wird von einer Schraube 3 ausgegangen, welche zwei Schaftabschnitte 2 und 9 mit unterschiedlichem Außendurchmesser aufweist. Dabei können die Gewindeabschnitte der Schraube die gleiche Gewindesteigung aufweisen, wobei bei einer solchen Konstruktion dann allerdings keine Möglichkeit für eine gegenseitige Anpressung beim Anziehen der Schraube besteht.

Wenn für die beiden Gewindeabschnitte A und B der Schraube 3 verschiedene Gewindesteigungen vorgesehen sind, dann ist es zweckmäßig, den dem antriebsseitigen Ende der Schraube 3 zugewandten Gewindeabschnitt A mit der kleineren Gewindesteigung auszustatten, um das Zusammenziehen beim Verschraubvorgang zu bewirken.

Bei der Darstellung in der Zeichnung und in der vorstehenden Beschreibung wird davon ausgegangen, den gewindefreien Bereich C des Schaftabschnittes 2 der Schraube 3 so auszubilden, dass er dem Kerndurchmesser des vom Gewinde B gebildeten Gewindeabschnittes A entspricht. Dadurch ist gerade am Übergangsbereich zwischen den miteinander zu verbindenden Holzprofilen 4, 5 ein entsprechend großer Querschnitt vorhanden.

In diesem Zusammenhang ist es aber auch denkbar, den gewindefreien Bereich C des Schaftabschnittes 2 mit einem abgestuften Durchmesser auszubilden. Diesfalls ergibt sich dann auch am Ende des gewindefreien Bereiches C am Übergang zu dem Schaftabschnitt 9 ein weiterer abgestufter Bereich. Daher ist ein dreistufiger Durchmesserbereich denkbar. Zudem besteht die Möglichkeit, daß der Durchmesser des gewindefreien Bereiches C des Schaftabschnittes 2 annähernd dem Außendurchmesser des Gewindeabschnittes B im Bereich des Schaftabschnittes 9 entspricht. Auch auf diese Weise ist eine optimale Möglichkeit zur Aufnahme von Querkräften gegeben, ohne dass der zur Aufnahme des gewindefreien Bereiches C vorgesehene Bohrlochbereich durch das vorab eingedrehte Gewinde 10 zerstört wird. Demgemäß ist zwischen der vorbereiteten Bohrung und dem gewindefreien Bereich C eine entsprechende Passung vorhanden.

## Patentansprüche

1. Schraube zur gegenseitigen Verbindung von stumpf oder in einem Gehrungsschnitt aneinander anliegenden oder aneinander anstoßenden Holzprofilen, wobei zwei mit einem Gewinde versehene Schaftabschnitte verschiedenen Durchmessers vorgesehen sind und der eine Schaftabschnitt mit dem größeren Durchmesser mit einem Werkzeugangriff ausgestaltet ist, **dadurch gekennzeichnet, dass** der Schaftabschnitt (2) mit dem größeren Durchmesser nur Ober einen dem werkzeugangriffseitigen Ende zugewandten Teilbereich seiner axialen Länge mit einem Gewindeabschnitt (A) versehen und der an diesen Gewindeabschnitt (A) anschließende Bereich (C) des Schaftabschnittes bis an den Übergang zum Schaftabschnitt (9) kleineren Durchmessers gewindefrei ausgebildet ist und einen dem Kerndurchmesser des vom Gewinde (6) gebildeten Gewindeabschnittes (A) entsprechenden Durchmesser aufweist.

2. Schraube nach Anspruch 1, **dadurch gekennzeichnet, dass** die Gewindeabschnitte (A, B) der Schraube (3) bzw. das durchgehende Gewinde der Schraube (3) die gleiche Gewindesteigung (S) aufweisen.

3. Schraube nach Anspruch 1 oder 2, **dadurch gekennzeichnet, dass** die beiden Gewindeabschnitte (A, B) der Schraube (3) eine unterschiedliche Gewindesteigung (S) aufweisen.

4. Schraube nach Anspruch 3, **dadurch gekennzeichnet, dass** der dem antriebsseitigen Ende der Schraube (3) zugewandte Gewindeabschnitt (A) eine kleinere Gewindesteigung aufweist als der dem anderen, freien Ende zugewandte Gewindeabschnitt (B).

5. Schraube nach einem der Ansprüche 1 bis 4, **dadurch gekennzeichnet, dass** der Schaftabschnitt (2) der Schraube (3) mit dem größeren Durchmesser bei bestimmungsgemäßem Einsatz in einem ersten Holzprofil (4) liegt und über zumindest einen kurzen Bereich in ein zweites Holzprofil (5) hineinragt.

6. Schraube nach Anspruch 2 oder 3, **dadurch gekennzeichnet, dass** die Steigung (S) des Gewindes (10) des in das zweite Holzprofil (5) eingreifenden Gewindeabschnittes (B) der Schraube (3) annähernd dem Kerndurchmesser (DK) des Schaftes (9) in diesem Gewindeabschnitt (B) entspricht.

## Claims

1. A screw for joining together timber sections which are butt-jointed or which adjoin one another in a mitre cut or which abut one another, wherein two shank portions of different diameter and provided with a screw-thread are provided, and the shank portion with the larger diameter is provided with a tool-engagement portion, **characterised in that** the shank portion (2) of larger diameter is provided with a threaded portion is provided with a threaded portion (A) only over a part of its axial length nearest the end on the tool-engagement side, and the section (C) of the shank portion adjacent this threaded portion (A) is formed threadlessly up to the transition into the shank portion (9) of smaller diameter and is of a diameter corresponding to the root diameter of the threaded portion (A) formed by the screw-thread (6).

2. A screw according to Claim 1, **characterised in that** the threaded portions (A,B) of the screw (3) or the continuous screw-thread of the screw (3) have the same thread pitch (S).

3. A screw according to Claim 1 or 2, **characterised in that** the two threaded portions (A,B) of the screw (3) have a different thread pitch (S).

4. A screw according to Claim 3, **characterised in that** the threaded portion (A) nearest the end of the screw (3) on the driving side has a smaller thread pitch than the threaded portion (B) nearest the other, free end.

5. A screw according to any one of Claims 1 to 4, **characterised in that**, when used as intended, the shank portion (2) of the screw (3) with the larger diameter is disposed in a first timber section (4) and over at least a short region projects into a second timber section (5).

6. A screw according to Claim 2 or 3, **characterised in that** the pitch (S) of the screw-thread (10) of the threaded portion (B) of the screw (3) engaging in the second timber section (5) corresponds approximately to the root diameter (DK) of the shank (9) in this threaded portion (B).

## Revendications

1. Vis pour l'assemblage de profilés de bois reposant l'un contre l'autre ou en contact l'un avec l'autre avec des joints droits ou en onglet, dans laquelle deux sections de tige de diamètres différents sont pourvues d'un filetage, dont la première section de tige ayant le diamètre le plus grand est équipée d'une prise d'outil,
**caractérisée en ce que**
la section de tige (2) de plus grand diamètre n'est pourvue d'une section filetée (A) que sur une zone partielle de sa longueur axiale tournée vers l'extrémité coté prise d'outil, et la zone (C) rattachée à cette section filetée (A) de la section de tige est sans filetage jusqu'à la transition avec la section de tige (9) de diamètre plus petit, et présente un diamètre correspondant au diamètre à fond de filet de la section filetée (A) formée par le filetage (6).

2. Vis selon la revendication 1,
**caractérisée en ce que**
les sections filetées (A, B) de la vis (3) ou le filetage continu de la vis (3) présentent le même pas (S).

3. Vis selon la revendication 1 ou 2,
**caractérisée en ce que**
les deux sections filetées (A, B) de la vis (3) présentent un pas (S) différent.

4. Vis selon la revendication 3,
**caractérisée en ce que**
la section filetée (A) tournée vers l'extrémité côté entraînement de la vis (3) présente un pas inférieur à celui de l'autre section filetée (B) tournée vers l'extrémité libre.

5. Vis selon l'une des revendications 1 à 4,
**caractérisée en ce que**
la section de tige (2) de la vis (3) de plus grande diamètre se trouve, dans le cas d'une insertion adéquate, dans un premier profilé de bois (4) et dépasse sur au moins une courte zone dans un deuxième profilé de bois (5).

6. Vis selon la revendication 2 ou 3,
**caractérisée en ce que**
le pas (S) du filetage (10) de la section filetée (B) de la vis (3) s'engageant dans le deuxième profilé de bois (5) correspond approximativement au diamètre à fond de filet (DK) de la tige (9) dans cette section filetée (B).
